# EUROPÄISCHE PATENTSCHRIFT

(11) **EP 3 289 303 B1**
(45) Veröffentlichungstag und Bekanntmachung des Hinweises auf die Patenterteilung: **28.04.2021**
(21) Anmeldenummer: 16710665.7
(22) Anmeldetag: 18.02.2016
(51) Int. Cl.: F01M 5/00, F28D 1/02, F28D 1/04, F28D 1/053, F28D 21/00, F28F 9/00, F28F 9/02, F28F 19/01

(54) **KÜHLERSTATION ZUM ANSCHLUSS EINES FLÜSSIGKEITSKÜHLERS**
COOLER STATION FOR CONNECTION OF A LIQUID COOLER
STATION À REFROIDISSEUR PERMETTANT LE RACCORDEMENT D'UN REFROIDISSEUR DE LIQUIDE

(30) Priorität: 28.04.2015 AT 2552015
(43) Veröffentlichungstag der Anmeldung: 07.03.2018
(73) Patentinhaber: Euler-Rolle, Thomas, 1190 Wien (AT)
(72) Erfinder: Euler-Rolle, Thomas, 1190 Wien (AT)
(74) Vertreter: Fox, Tobias
(86) Internationale Anmeldenummer: PCT/AT2016/000012
(87) Internationale Veröffentlichungsnummer: WO 2016/172741

(56) Entgegenhaltungen:
- WO-A2-2010/135753
- JP-A- H11 316 065
- US-A1- 2006 081 363
- US-B1- 6 293 011

## Beschreibung

Die vorliegende Erfindung betrifft eine Kühlerstation mit einem Flüssigkeitskühler, welcher einen ersten Verteilerkasten, bestehend aus einem hohlen Strangpreßprofil aus Aluminium, aufweist, welches nach außen offene Führungsnuten aufweist, sowie mit einer Plattform, die durch in die Führungsnuten des ersten Verteilerkastens einsetzbare mechanische Anschlußelemente auf den Flüssigkeitskühler aufschiebbar und fest mit ihm verbindbar ist. Ferner betrifft die Erfindung ein System zur Bereitstellung von Flüssigkeitskühleranlagen.
Im Stand der Technik sind verschiedene Arten von Flüssigkeitskühlern, insbesondere Ölkühler, bekannt. Dabei wird ein Strom von zu kühlendem flüssigem Öl durch hohle Metallrippen geleitet, die die Wärme an die Umgebungsluft weiterleiten und dort abgeben. Solche Flüssigkeitskühler sind seit Jahrzehnten weitverbreitet und finden beispielsweise als Bestandteil von Motoren, bei welchen während des Betriebs kontinuierlich erhitztes Öl heruntergekühlt werden muß, Verwendung. Flüssigkeits- bzw. Ölkühler werden nicht alleinstehend verwendet, sondern sind Bestandteil eines Ölkreislaufes aus einem Öltank, einem Ölfilter und verschiedenen Anschlüssen. Es ist weiterhin bekannt, die Kühlleistung eines Flüssigkeitskühlers durch Anschluß an ein Luftgebläse zu gewährleisten.

Die WO 2010/135753 A2 lehrt einen Ölkühler, bei welchem Anschlußelemente für den Ölzulauf und den Ölablauf oder auch Verschlußkappen mit einem einheitlichen System aufgeschoben und fest verschraubt werden können. Nachteilig ist hier, daß selbst in der einfachsten Ausführungsform vier Anschlußelemente o.ä. auf den Ölkühler aufgeschoben werden müssen, um ihn einsatzfähig zu machen.

Die US 2006/081363 A1 offenbart einen Seitentank für einen Ölkühler, der Längsrippen aufweist, die gleichzeitig einen Kühleffekt bewirken und als Aufnahmeschienen für die Köpfe von Verbindungsschrauben zum Ölkühler dienen. Nachteil dieser Lehre ist die Unveränderbarkeit des Seitentanks hinsichtlich von Flüssigkeitsanschlüssen und weiteren möglichen Peripheriegeräten.

Die US 6293011 B1 beschreibt einen Wärmetauscher. Er weist stirnseitig Sammelbehälter auf, deren Flüssigkeitsanschlüsse vor dem Verschweißen durch Aufschieben auf Längsschienen in Position gehalten werden. Es sind aber mindestens zwei Flüssigkeitsanschlüsse für einen regulären Betrieb dieses Systems erforderlich.

Aus der JP H11 316065 A geht eine Kondensiervorrichtung hervor, bei welcher ein Auffangtank an eine Kühlrippenkonstruktion angeflanscht ist. Die Verbindung erfolgt in nachteiliger Weise durch eine Vielzahl von mechanischen Elementen, bestehend zumindest aus einem anzuschraubenden Flanschteil, einer Schraube und einem Aufnahmeblock für den Auffangtank.
Es besteht weiterhin ein Bedarf, Flüssigkeitskühler, Kühlerstationen und Flüssigkeitskühleranlagen mit verschiedenen hydraulischen Anschlußmöglichkeiten, verschiedenen Zusatzfunktionen, wie etwa einer integrierten Temperaturmessung, verschiedenen Kenndaten bezüglich der Kühlleistung, der Filtertypen, der Öltankgrößen und weiterer Parameter bereitzustellen. Gleichzeitig besteht ein Bedarf daran, die Herstellungskosten für die genannten Vorrichtungen zu senken.

Die erfindungsgemäße Kühlerstation erreicht dies dadurch, daß die Kühlerstation ein Set von Plattformen umfaßt, wobei jeweils eine Plattform mit dem Flüssigkeitskühler verbindbar ist und das Set von Plattformen Plattformen umfaßt, die verschiedene hydraulische und/oder elektrische Anschlüsse aufweisen, wobei jede Plattform des Sets gleiche mechanische Anschlußelemente zur Verbindung mit dem Flüssigkeitskühler sowie getrennte Anschlüsse für mindestens die Flüssigkeitszuleitung und die Flüssigkeitsableitung aufweist.

Eine bevorzugte Ausführungsform der Kühlerstation zeichnet sich dadurch aus, daß der Flüssigkeitskühler einen zweiten Verteilerkasten, bestehend aus einem hohlen Strangpreßprofil aus Aluminium, aufweist, welcher nach außen offene Führungsnuten zum Anbringen an eine Basis aufweist.
In einer Ausführungsform der Erfindung weist der erste Verteilerkasten eine zu der Flüssigkeitszuleitung koaxial geführte Flüssigkeitsableitung innerhalb einer Öffnung auf.
Zur weiteren Ausgestaltung der Erfindung umfaßt das Set von Plattformen mindestens zwei Mitglieder.
Bevorzugt ist in einer Ausgestaltung der Flüssigkeitskühleranlage, daß mindestens eine Plattform aus dem Set von Plattformen ein elektrisches Thermometer zur Messung der Flüssigkeitstemperatur aufweist.
In einer Ausführungsform der Erfindung weist mindestens eine Plattform aus dem Set von Plattformen einen austauschbaren Flüssigkeitsfilter auf.

In einer anderen Ausführungsform der Erfindung weist mindestens eine Plattform aus dem Set von Plattformen mindestens einen Flansch zur festen Verbindung der Plattform mit einem Abschnitt eines externen Rahmens, Gestells o.dgl. auf.

Eine bevorzugte Ausführungsform der Kühlerstation zeichnet sich dadurch aus, daß die Kühlerstation ein Set von Flüssigkeitskühlern umfaßt, bestehend aus Flüssigkeitskühlern verschiedener Kühlleistungen, wobei jeder Flüssigkeitskühler des Sets gleiche mechanische und hydraulische Anschlüsse und eine gleiche Baubreite aufweist.

Zur weiteren Ausgestaltung der Erfindung weist die Kühlerstation einen mit dem Flüssigkeitskühler verbundenen Rahmen auf, durch welchen die Kühlerstation für sich stehend aufstellbar ist und in welchem ein Raumvolumen gebildet ist, in das zumindest ein Flüssigkeitskühler und ein Gebläse gleichzeitig aufnehmbar sind, und wobei die Kühlerstation eine Basis aufweist, auf der Anschlüsse für einen Flüssigkeitskühler, ein Gebläse und einen Flüssigkeitstank vorgesehen sind, und wobei die Basis eine Einsatzöffnung für einen Flüssigkeitsfilter aufweist, die derart angeordnet ist, daß der Flüssigkeitsfilter in die Einsatzöffnung und in den Flüssigkeitstank im an die Basis angeschlossenen Zustand hineinragend einsetzbar ist.

Eine bevorzugte Ausführungsform der Kühlerstation zeichnet sich dadurch aus, daß sie mit den folgenden vier Elementen verbunden ist: einen Flüssigkeitskühler, ein Gebläse, einen Flüssigkeitstank und einen Flüssigkeitsfilter.
Das erfindungsgemäße System zur Bereitstellung von Flüssigkeitskühleranlagen umfaßt mindestens eine Kühlerstation sowie:
- ein Set von Flüssigkeitskühlern, bestehend aus Flüssigkeitskühlern verschiedener Kühlleistungen, wobei jeder Flüssigkeitskühler des Sets gleiche mechanische und hydraulische Anschlüsse und eine gleiche Baubreite aufweist,
- ein Set von Gebläsen, bestehend aus Gebläsen verschiedener Leistungen, wobei jedes Gebläse des Sets gleiche mechanische und elektrische Anschlüsse sowie gleiche Außenabmessungen aufweist, und
- ein Set von Flüssigkeitstanks, bestehend aus Flüssigkeitstanks verschiedener Fassungsvermögen, wobei jeder Flüssigkeitstank des Sets gleiche Anschlüsse und eine gleiche Baubreite aufweist
- ein Set von Flüssigkeitsfiltern, bestehend aus Flüssigkeitsfiltern verschiedener Kenngrößen, wobei jeder Flüssigkeitsfilter des Sets gleiche mechanische und hydraulische Anschlüsse aufweist.

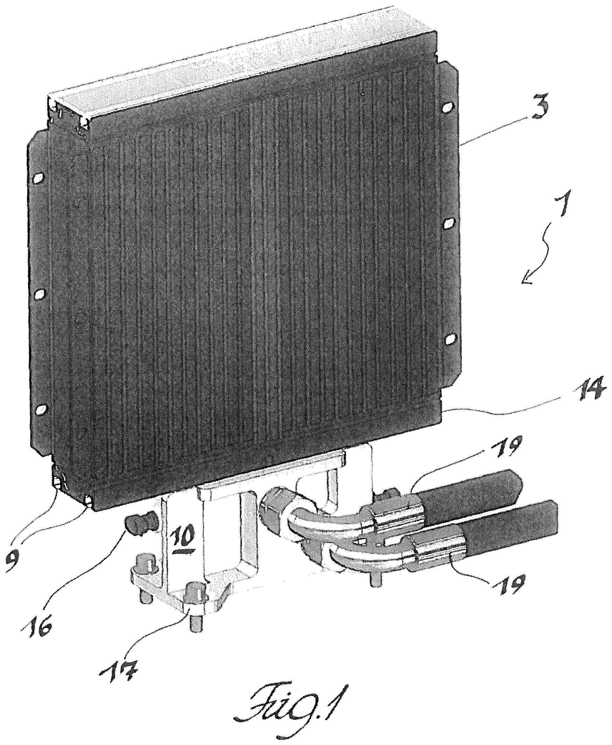

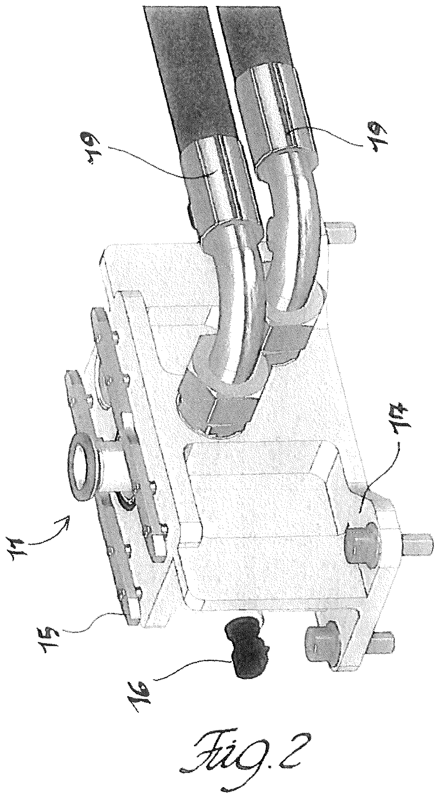

Eine bevorzugte Ausführungsform des Systems zeichnet sich dadurch aus, daß das Set von Flüssigkeitskühlern und/oder das Set von Gebläsen und/oder das Set von Flüssigkeitstanks und/ oder das Set von Flüssigkeitsfiltern mindestens zwei Mitglieder hat.
Die Erfindung wird nachstehend anhand eines in den Zeichnungen ausgeführten Ausführungsbeispieles näher erläutert. Es zeigen: Fig. 1 eine Schrägansicht der Kühlerstation, Fig. 2 eine Schrägansicht der Plattform, Fig. 3 einen Schnitt durch die Kühlerstation, Fig. 4 eine Schrägansicht der Kühlerstation, Fig. 5 eine gesprengte Darstellung der Flüssigkeitskühleranlage und Fig. 6 eine schematische Schrägansicht einer zusammengesetzten Flüssigkeitskühleranlage.
Die Kühlerstation 1 besteht gemäß Fig. 1 aus einem Flüssigkeitskühler 3, der mit einer Plattform 10 verbunden ist. Die Plattform 10 ist dabei aus einem Set vieler Plattformen 10 ausgewählt, die jeweils andere hydraulische, mechanische oder elektrische Anschlüsse in Abhängigkeit der Kundenwünsche aufweisen. Jede Plattform 10 aus diesem Set ist jedoch auf dieselbe Art mit dem Flüssigkeitskühler 3 verbindbar. Die Verbindung erfolgt durch Aufsetzen oder gegebenenfalls Aufschieben der Plattform 10 auf den Verteilerkasten 14 des Flüssigkeitskühlers, welcher zwei nach außen offene T-Nuten 9 als mechanische Verbindungsmittel aufweist. Die Plattform hat dann gemäß Fig. 2 die passenden, gegenstückigen mechanischen Anschlußelemente 15, die in die T-Nuten 9 des Verteilerkastens 14 eingreifen.
Auf diese Weise läßt sich mit wenigen modularen Elementen eine Vielzahl von Kühlerstationen 1 mit verschiedenen Parametern bereitstellen. Zusätzlich kann der Flüssigkeitskühler 3 aus einem Set von Flüssigkeitskühlern 3 mit verschiedenen Kühlleistungen gewählt werden. Die mechanische Verbindung mit einer Plattform 10 erfolgt dabei stets auf die gleiche Weise (siehe oben).
Bei dem in Fig. 1 gezeigten Beispiel weist die Plattform 10 Anschlüsse für die Flüssigkeitszuleitung und die Flüssigkeitsableitung 19 sowie einen integrierten Temperaturmesser 16 zur Ermittlung der Temperatur der (vorzugsweise den Flüssigkeitskühler 3 verlassenen) Flüssigkeit auf. Ferner ist die Plattform 10 mit Flanschen 17 versehen, damit die Kühlerstation insgesamt an den Rahmen eines umgebenen Bauwerks, Motors oder einer Maschine (nicht gezeigt) montiert werden kann. Alternativ ist der Flüssigkeitskühler 3 an seiner von der Plattform 10 abgewandten Seite mit einem Verteilerkasten 13 ausgestattet, der T-Nuten 9 derselben vorbestimmten Norm aufweist. Dadurch ist die Kühlerstation 1 mit weiteren Elementen oder einer Maschine (nicht gezeigt) gemäß eines innerhalb der Erfindung gewählten Systems verbindbar.

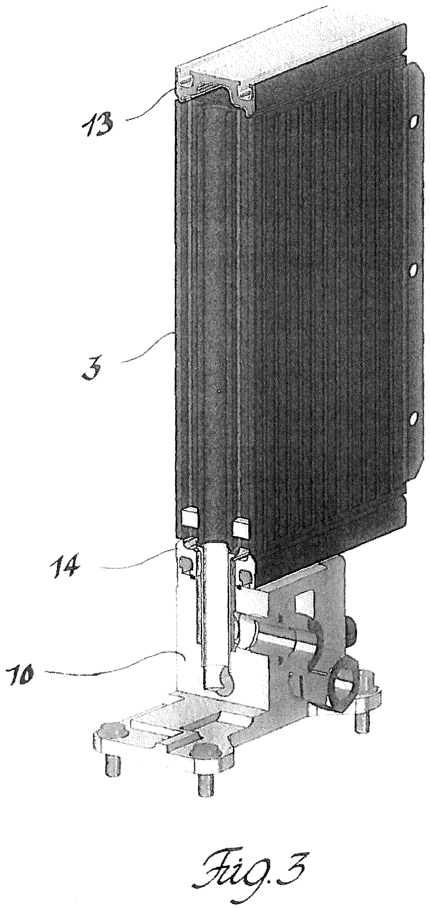

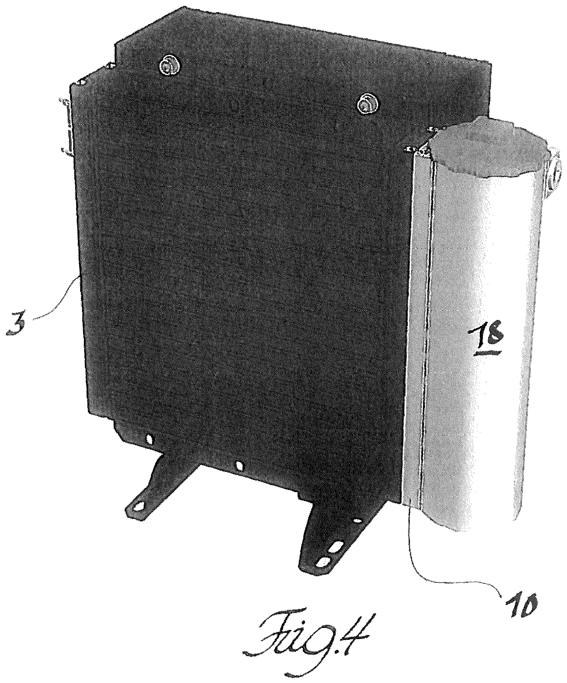

Wie im Stand der Technik bekannt, bestehen die Verteilerkästen 13 und 14 aus einem hohlen Strangpreßprofil aus Aluminium. Bisher waren die Verteilerkästen 13, 14 mit zwei Öffnungen versehen; eine für die Flüssigkeitszuleitung und eine für die Flüssigkeitsableitung. Erfindungsgemäß werden diese beiden Öffnungen, wie in Fig. 2 und 3 gezeigt, zu einer gemeinsamen Öffnung 11 vereinigt. Dies wird durch eine koaxiale Führung der Flüssigkeitszuleitung und der Flüssigkeitsableitung ermöglicht. Innerhalb der Plattform 10 werden getrennte Anschlüsse für die Flüssigkeitszuleitung und die Flüssigkeitsableitung koaxial vereinigt. Das hydraulische Gegenstück zur Öffnung 11 - wiederum eine Öffnung - befindet sich gemäß Fig. 3 im Verteilerkasten 14 sowie im Flüssigkeitskühler 3 insgesamt, wo die koaxial geführten beiden Ströme getrennt werden, so daß die Flüssigkeit aus der Flüssigkeitszuleitung zunächst zum Verteilerkasten 13 geführt wird, woraufhin der Flüssigkeitsstrom innerhalb des Verteilerkastens 13 auf die Hohlrippen verteilt wird. Am anderen Ende der Hohlrippen werden innerhalb des Verteilerkastens 14 alle Flüssigkeitsströme wieder vereinigt und der Flüssigkeitsableitung zugeführt. Diese Bauweise hat den Vorteil, die Anzahl der erforderlichen Dichtungen (hier: zwischen Verteilerkasten 14 und Plattform 10) beim Anschließen der Flüssigkeitszu- und -ableitungen an einen Flüssigkeitskühler 3 von zwei auf eins zu reduzieren.
Gemäß Fig. 4 kann in eine der Plattformen 10, mit welcher der Flüssigkeitskühler 3 verbindbar ist, ein Flüssigkeitsfilter 18 integriert sein.

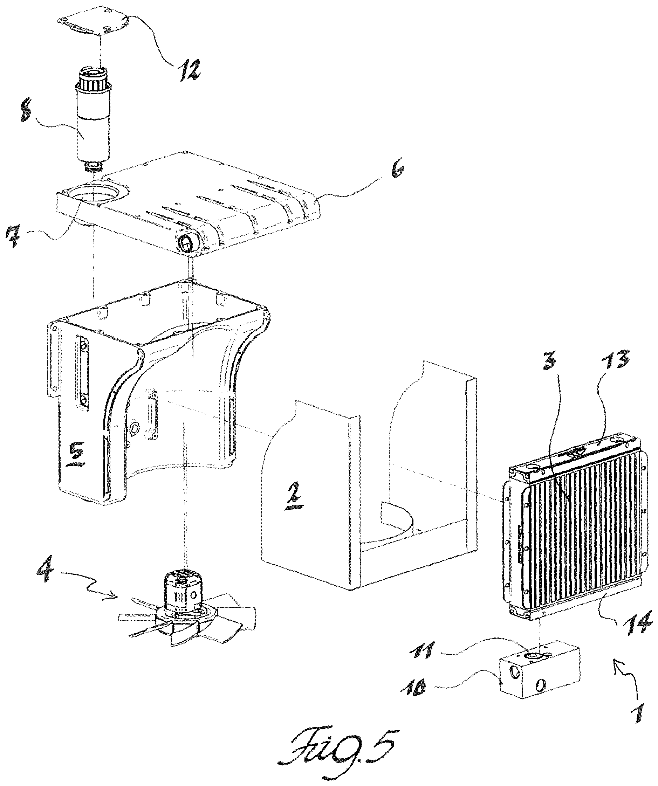

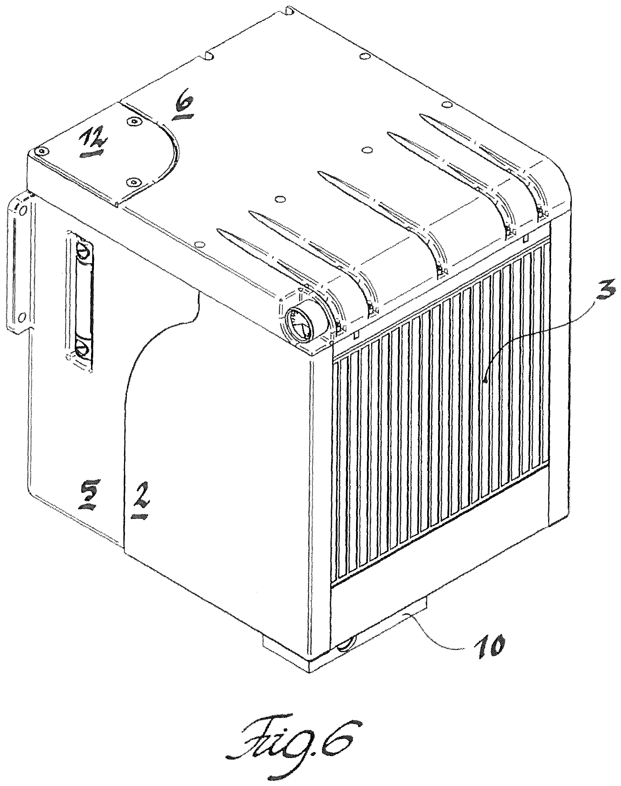

Die Kühlerstation 1 läßt sich zusammen mit dem Gedanken des modularen Aufbaus zu einer Flüssigkeitskühleranlage erweitern. Der zentrale Teil einer Flüssigkeitskühleranlage bleibt gemäß Fig. 5 die Kühlerstation 1, bestehend aus einem Flüssigkeitskühler 3 und einer aus einem Set gewählten Plattform 10, wie in Fig. 1 gezeigt. Eine Basis 6 und ein Rahmen 2 bieten die Anschlußmöglichkeiten für die Kühlerstation 1, ein Gebläse 4, einen Flüssigkeitstank 5 sowie einen Flüssigkeitsfilter 8 (sofern letzterer nicht bereits in der Plattform 10 integriert ist oder sofern ein zweiter Filter 8 zu dem Filter 18 in der Plattform 10 gewünscht ist). Mit Anschlüssen sind abhängig von der Bauart mechanische Anschlüsse (Verschraubungen, Haken oder Profile zum Einhängen etc.), elektrische Anschlüsse oder hydraulische Anschlüsse (Verbindungen im Ölkreislauf) gemeint. Darüber hinaus definieren Basis 6 und Rahmen 2 das Raumvolumen, in welchem die Bestandteile der Flüssigkeitskühleranlage in möglichst kompakter Zusammenfassung Platz haben. Dazu ist die Basis 6 im wesentlichen als Deckel der Kühlerstation 1 bzw. der Flüssigkeitskühleranlage ausgebildet, die die Breite B und die Tiefe T der Flüssigkeitskühleranlage festlegt. Die Basis 6 kann beispielsweise einen nahezu quadratischen Grundriß haben, d.h. Breite B und Tiefe T sind im wesentlichen gleich groß. Der mit der Basis 6 verbundene Rahmen 2 legt dann die Höhe H der Kühlerstation 1 bzw. der Flüssigkeitskühleranlage insgesamt fest. Ist die Höhe H im wesentlichen gleich groß zur Breite B und Tiefe T, dann erhält die Flüssigkeitskühleranlage die Kontur eines Würfels. Zur Vervollständigung der Flüssigkeitskühleranlage werden in diese Kühlerstation 1 die folgenden vier Elemente eingebaut: ein Flüssigkeitskühler 3, ein Gebläse 4, ein Öltank 5 und ein Ölfilter 8. Diese vier Bestandteile können jeweils aus einem Set ausgewählt werden, um die Parameter der Flüssigkeitskühleranlage, wie Öltankgröße, Kühlerleistung, Stromverbrauch etc., zu wählen (siehe unten) .
Die erfindungsgemäße Flüssigkeitskühleranlage, wie in Fig. 6 gezeigt, kann für sich stehend aufgestellt werden. Das heißt, jede ihrer Seiten kann als Grundfläche zum Abstellen verwendet werden, ohne daß Hilfsmittel gegen ein unmittelbares Umkippen oder ein Umkippen aufgrund möglicher, nicht aber zerstörerischer Stöße erforderlich wären. Während des Betriebs der Flüssigkeitskühleranlage kann jedoch eine Aufhängung an einen externen Rahmen (nicht gezeigt) oder auf ein Untergestell/Füße (nicht gezeigt) sinnvoll sein (z.B. für eine ungehinderte Kühlluftzufuhr).
Es entsteht ein System zur Bereitstellung von Flüssigkeitskühleranlagen, dessen Vorteil darin besteht, daß die Anlagen an eine breite Variation von Anforderungen angepaßt werden können, jedoch jeweils dieselbe Kühlerstation 1 oder aber dieselbe Kombination aus Basis 6 und Rahmen 2 als Herzstück aufweisen. Die äußeren Abmaße hinsichtlich Breite B, Tiefe T und Höhe H gemäß Fig. 6 bleibt bei allen Flüssigkeitskühleranlagen des Systems gleich. Der modulare Aufbau der Flüssigkeitskühleranlagen führt zu einer Senkung der Herstellungsko-sten.
Ein weiterer Vorteil der Erfindung besteht darin, daß die Flüssigkeitskühleranlagen des Systems sehr kompakt und gleichzeitig bedienungsfreundlich aufgebaut sind. Die Bestandteile wirken zusammen: Der Rahmen 2 bildet gleichzeitig einen Teil des Gehäuses und des Luftkanals für den Flüssigkeitskühler 3. Der Tank 5 wirkt gleichzeitig als Luftkanal für das Gebläse 4. Die Basis 6 wirkt gleichzeitig als Teil des Gehäuses und als mechanischer Anschlußpunkt für den Flüssigkeitskühler 3 und den Tank 5.
Der Flüssigkeitskühler 3 ist als Plattenkühler ausgebildet; zwischen zwei Verteilerkästen ist ein parallelepipedisches Paket aus Hohlrippen angeordnet. Während die Kühlerstation 1 die mechanischen Anschlußpunkte für den Flüssigkeitskühler 3 zur Verfügung stellt, wird die Flüssigkeitszuleitung und die Flüssigkeitsableitung über eine mit dem Verteilerka-sten 14 verbundene Plattform 10 hergestellt. Die Verteilerkä-sten 13 und 14 weisen, wie oben beschrieben, Führungsnuten 9 auf, in welche zum Beispiel Köpfe von Verbindungsschrauben eingesetzt werden können. Die in dem Beispiel gezeigten Führungsnuten weisen einen T-förmigen Querschnitt auf. Auf diese Weise kann die Plattform 10 leicht, sicher und schnell auf den Verteilerkasten 14 aufgeschoben und am gewünschten Ort fest verschraubt werden.

Teil des Systems zur Bereitstellung von Flüssigkeitskühleranlagen ist ein Set aus mindestens zwei Flüssigkeitskühlern 3, die sich untereinander dadurch unterscheiden, daß sie eine unterschiedliche Kühlleistung bieten. Dementgegen gleichen sich die Flüssigkeitskühler 3 aus der Serie, die das Set von Flüssigkeitskühlern 3 bilden, darin, daß sie eine gleiche Breite (in Richtung der Breite B der Basis 6) aufweisen, um mit den gleichen Mitteln und demselben Verfahrensschritt in die Flüssigkeitskühleranlage eingebaut werden zu können.
In die Kühlerstation 1 kann ein Gebläse 4 aus einem Set von Gebläsen 4 eingebaut werden. Bei dem in Fig. 5 gezeigten Ausführungsbeispiel stellt der Tank 5 den mechanischen Anschlußpunkt für das Gebläse 4 dar. Die elektrischen Anschlüsse erfolgen über die Basis 6. Alle Gebläse 4 aus dem Set von Gebläsen 4 gleichen sich in ihren mechanischen und/oder elektrischen Anschlußmöglichkeiten. Sie unterscheiden sich zum Beispiel in ihrer Leistung, d.h. in dem pro Zeiteinheit beförderten Luftvolumen.
Der mit der Basis 6 zu verbindende Flüssigkeitstank 5 ist jeweils ein Mitglied aus einem Set von Flüssigkeitstanks 5. Alle Mitglieder dieses Sets von Flüssigkeitstanks 5 unterscheiden sich in ihrem Fassungsvermögen, stimmen jedoch in ihrer Baubreite überein. Die Basis 6 bildet dabei den auf jeden Flüssigkeitstank 5 aufschraubbaren Deckel und darüber hinaus die Öffnung 7 zum Einsatz des Flüssigkeitsfilters 8. Auf diese Weise kann die technische Variation der für dieses System geeigneten Flüssigkeitstanks 5, unabhängig von der mechanischen Verbindung des Flüssigkeitsfilters 8 mit der gesamten Flüssigkeitskühleranlage, erfolgen. Bei dem gezeigten Ausführungsbeispiel wird der Flüssigkeitskühler 8 in die standardisierte Öffnung 7 der Basis 6 eingesetzt und dabei gleichzeitig in geeigneter Weise mit der Flüssigkeit des Flüssigkeitstanks 5 in Verbindung gebracht. Nach Einsetzen im Flüssigkeitsfilter 8 wird die Öffnung 7 mit einem Deckel 12 verschlossen.
Auch der Flüssigkeitsfilter 8 kann ein Mitglied aus einem Set von mindestens zwei Flüssigkeitsfiltern 8 sein, dessen Mitglieder mechanisch so ausgelegt sind, daß sie jeweils durch die Öffnung 7 mit dem Flüssigkeitstank 5 verbindbar sind, sich jedoch in ihren Filtereigenschaften unterscheiden. Diese Eigenschaften können die Filterleistung, die Langlebigkeit oder die Ausrichtung auf einen speziellen Flüssigkeits- bzw. Öltyp sein.
Besteht beispielsweise das Set von Flüssigkeitskühlern 3 aus drei verschiedenen Mitgliedern bzw. Elementen, so wie auch die Sets von Gebläsen 4, Flüssigkeitstanks 5 und Flüssigkeitsfiltern 8 jeweils aus drei Elementen bestehen, so kann der Kunde aus einem System von 3⁴ = 81 Flüssigkeitskühleranlagen mit verschiedenen Kenngrößen wählen, während der Hersteller des Systems im wesentlichen nur einen Typ Kühlerstation 1 und zwölf verschiedene darin einzubauende Bestandteile vorrätig halten muß. In der Praxis werden die Bauteile-Sets teilweise wesentlich mehr Elemente umfassen, so daß die Produktpalette drastisch vergrößert ist.

## Patentansprüche

1. Kühlerstation (1) mit einem Flüssigkeitskühler (3), welcher einen ersten Verteilerkasten (14), bestehend aus einem hohlen Strangpreßprofil aus Aluminium, aufweist, welches nach außen offene Führungsnuten aufweist, sowie mit einer Plattform (10), die durch in die Führungsnuten des ersten Verteilerkastens einsetzbare mechanische Anschlußelemente auf den Flüssigkeitskühler aufschiebbar und fest mit ihm verbindbar ist, wobei die Kühlerstation (1) ein Set von Plattformen (10) umfaßt, wobei jeweils eine Plattform (10) mit dem Flüssigkeitskühler (3) verbindbar ist und das Set Plattformen (10) umfaßt, die verschiedene hydraulische und/oder elektrische Anschlüsse aufweisen, wobei jede Plattform (10) des Sets gleiche mechanische Anschlußelemente (15) zur Verbindung mit dem Flüssigkeitskühler (3) aufweist, **dadurch gekennzeichnet, dass** jede Plattform (10) des Sets getrennte Anschlüsse für mindestens die Flüssigkeitszuleitung (19) und die Flüssigkeitsableitung (19) aufweist.

2. Kühlerstation nach Anspruch 1, **dadurch gekennzeichnet, daß** der Flüssigkeitskühler (3) einen zweiten Verteilerkasten (13), bestehend aus einem hohlen Strangpreßprofil aus Aluminium, aufweist, welcher nach außen offene Führungsnuten (9) zum Anbringen an eine Basis (6) aufweist.

3. Kühlerstation nach Anspruch 1 oder 2, **dadurch gekennzeichnet, daß** der erste Verteilerkasten (14) eine zu der Flüssigkeitszuleitung koaxial geführte Flüssigkeitsableitung innerhalb einer Öffnung (11) aufweist.

4. Kühlerstation nach einem der Ansprüche 1 bis 3, **dadurch gekennzeichnet, daß** das Set von Plattformen (10) minde-stens zwei Mitglieder umfaßt.

5. Kühlerstation nach einem der Ansprüche 1 bis 4, **dadurch gekennzeichnet, daß** mindestens eine Plattform (10) aus dem Set von Plattformen (10) ein elektrisches Thermometer (16) zur Messung der Flüssigkeitstemperatur aufweist.

6. Kühlerstation nach einem der Ansprüche 1 bis 5, **dadurch gekennzeichnet, daß** mindestens eine Plattform (10) aus dem Set von Plattformen (10) einen austauschbaren Flüssigkeitsfilter (18) aufweist.

7. Kühlerstation nach einem der Ansprüche 1 bis 6, **dadurch gekennzeichnet, daß** mindestens eine Plattform (10) aus dem Set von Plattformen (10) mindestens einen Flansch (17) aufweist.

8. Kühlerstation nach einem der Ansprüche 1 bis 7, **dadurch gekennzeichnet, daß** die Kühlerstation (1) ein Set von Flüssigkeitskühlern (3) umfaßt, bestehend aus Flüssigkeitskühlern (3) verschiedener Kühlleistungen, wobei jeder Flüssigkeitskühler (3) des Sets gleiche mechanische und hydraulische Anschlüsse und eine gleiche Baubreite aufweist.

9. Kühlerstation (1) nach einem der Ansprüche 1 bis 8, **dadurch gekennzeichnet, daß** die Kühlerstation (1) einen mit dem Flüssigkeitskühler (3) verbundenen Rahmen (2) aufweist, durch welchen die Kühlerstation (1) für sich stehend aufstellbar ist und in welchem ein Raumvolumen gebildet ist, in das zumindest ein Flüssigkeitskühler (3) und ein Gebläse (4) gleichzeitig aufnehmbar sind, und wobei die Kühlerstation (1) eine Basis (6) aufweist, auf der Anschlüsse für einen Flüssigkeitskühler (3), ein Gebläse (4) und einen Flüssigkeitstank (5) vorgesehen sind, und wobei die Basis (6) eine Einsatzöffnung (7) für einen Flüssigkeitsfilter (8) aufweist, die derart angeordnet ist, daß der Flüssigkeitsfilter (8) in die Einsatzöffnung (7) und in den Flüssigkeitstank im an die Basis (6) angeschlossenen Zustand hineinragend einsetzbar ist.

10. Kühlerstation nach Anspruch 9, **dadurch gekennzeichnet, daß** sie mit den folgenden vier Elementen verbunden ist:
einen Flüssigkeitskühler (3),
ein Gebläse (4),
einen Flüssigkeitstank (5) und
einen Flüssigkeitsfilter (8).

11. System zur Bereitstellung von Flüssigkeitskühleranlagen, umfassend mindestens eine Kühlerstation (1), nach einem der Ansprüche 1 bis 10, sowie
- ein Set von Flüssigkeitskühlern (3), bestehend aus Flüssigkeitskühlern (3) verschiedener Kühlleistungen, wobei jeder Flüssigkeitskühler (3) des Sets gleiche mechanische und hydraulische Anschlüsse und eine gleiche Baubreite aufweist,
- ein Set von Gebläsen (4), bestehend aus Gebläsen (4) verschiedener Leistungen, wobei jedes Gebläse (4) des Sets gleiche mechanische und elektrische Anschlüsse sowie gleiche Außenabmessungen aufweist, und
- ein Set von Flüssigkeitstanks (5), bestehend aus Flüssigkeitstanks (5) verschiedener Fassungsvermögen, wobei jeder Flüssigkeitstank (5) des Sets gleiche Anschlüsse und eine gleiche Baubreite aufweist
- ein Set von Flüssigkeitsfiltern (8), bestehend aus Flüssigkeitsfiltern (8) verschiedener Kenngrößen, wobei jeder Flüssigkeitsfilter (8) des Sets gleiche mechanische und hydraulische Anschlüsse aufweist.

12. System zur Bereitstellung von Flüssigkeitskühleranlagen nach Anspruch 7, **dadurch gekennzeichnet, daß** das Set von Flüssigkeitskühlern (3) und/oder das Set von Gebläsen (4) und/ oder das Set von Flüssigkeitstanks (5) und/oder das Set von Flüssigkeitsfiltern (8) mindestens zwei Mitglieder hat.

## Claims

1. Cooling station (1) comprising a liquid cooler (3) which has a first distribution box (14) consisting of a hollow extruded profile made of aluminium that has outwardly open guide grooves, and comprising a platform (10) which can be pushed onto the liquid cooler and fixedly connected thereto by means of mechanical connecting elements which can be inserted into the guide grooves of the first distribution box, the cooling station (1) comprising a set of platforms (10), each platform (10) being connectable to the liquid cooler (3), and the set comprising platforms (10) which have various hydraulic and/or electrical connections, each platform (10) of the set having the same mechanical connecting elements (15) for connecting to the liquid cooler (3), **characterised in that** each platform (10) of the set has separate connections for at least the liquid feed line (19) and the liquid discharge line (19).

2. Cooling station according to claim 1, **characterised in that** the liquid cooler (3) has a second distribution box (13) consisting of a hollow extruded profile made of aluminium, which second distribution box has outwardly open guide grooves (9) for attachment to a base (6).

3. Cooling station according to either claim 1 or claim 2, **characterised in that** the first distribution box (14) has a liquid discharge line which is guided coaxially with respect to the liquid feed line within an opening (11).

4. Cooling station according to any of claims 1 to 3, **characterised in that** the set of platforms (10) comprises at least two members.

5. Cooling station according to any of claims 1 to 4, **characterised in that** at least one platform (10) from the set of platforms (10) has an electrical thermometer (16) for measuring the liquid temperature.

6. Cooling station according to any of claims 1 to 5, **characterised in that** at least one platform (10) from the set of platforms (10) has a replaceable liquid filter (18).

7. Cooling station according to any of claims 1 to 6, **characterised in that** at least one platform (10) from the set of platforms (10) has at least one flange (17).

8. Cooling station according to any of claims 1 to 7, **characterised in that** the cooling station (1) comprises a set of liquid coolers (3) consisting of liquid coolers (3) of various cooling capacities, each liquid cooler (3) of the set having the same mechanical and hydraulic connections and the same overall width.

9. Cooling station (1) according to any of claims 1 to 8, **characterised in that** the cooling station (1) has a frame (2) which is connected to the liquid cooler (3) and by means of which the cooling station (1) can be place so as to stand independently and in which a volume of space is formed, in which at least one liquid cooler (3) and a fan (4) can be accommodated at the same time, the cooling station (1) having a base (6) on which connections for a liquid cooler (3), a fan (4) and a liquid tank (5) are provided, and the base (6) having an insertion opening (7) for a liquid filter (8) that is arranged such that the liquid filter (8) can be inserted so as to protrude into the insertion opening (7) and into the liquid tank when connected to the base (6).

10. Cooling station according to claim 9, **characterised in that** it is connected to the following four elements:
a liquid cooler (3),
a fan (4),
a liquid tank (5), and
a liquid filter (8).

11. System for providing liquid cooling installations, comprising at least one cooling station (1) according to any of claims 1 to 10 and
- a set of liquid coolers (3) consisting of liquid coolers (3) of various cooling capacities, wherein each liquid cooler (3) of the set has the same mechanical and hydraulic connections and the same overall width,
- a set of fans (4) consisting of fans (4) of various capacities, wherein each fan (4) of the set has the same mechanical and electrical connections and the same external dimensions, and
- a set of liquid tanks (5) consisting of liquid tanks (5) of various capacities, wherein each liquid tank (5) of the set has the same connections and the same overall width,
- a set of liquid filters (8) consisting of liquid filters (8) of various characteristics, wherein each liquid filter (8) of the set has the same mechanical and hydraulic connections.

12. System for providing liquid cooling installations according to claim 7, **characterised in that** the set of liquid coolers (3) and/or the set of fans (4) and/or the set of liquid tanks (5) and/or the set of liquid filters (8) has at least two members.

## Revendications

1. Poste de refroidissement (1) comprenant un refroidisseur de liquide (3) muni d'un premier caisson répartiteur (14), constitué d'un profilé extrudé creux en aluminium qui comporte des rainures de guidage ouvertes vers l'extérieur, ainsi qu'une plate-forme (10) pouvant être mise en place, par l'intermédiaire d'éléments mécaniques de raccordement pouvant être insérés dans lesdites rainures de guidage du premier caisson répartiteur, sur ledit refroidisseur de liquide auquel elle peut être reliée rigidement, sachant que ledit poste de refroidissement (1) inclut un ensemble de plates-formes (10) et qu'une plate-forme (10) peut, à chaque fois, être reliée au refroidisseur de liquide (3), ledit ensemble comprenant des plates-formes (10) pourvues de divers raccords hydrauliques et/ou électriques, chaque plate-forme (10) dudit ensemble étant dotée d'éléments mécaniques de raccordement (15) identiques, dévolus à la liaison avec ledit refroidisseur de liquide (3), **caractérisé par le fait que** chaque plate-forme (10) de l'ensemble est munie de raccords distincts, au moins destinés au conduit (19) d'arrivée de liquide et au conduit (19) d'évacuation de liquide.

2. Poste de refroidissement (1) selon la revendication 1, **caractérisé par le fait que** le refroidisseur de liquide (3) présente un second caisson répartiteur (13), constitué d'un profilé extrudé creux en aluminium qui est muni de rainures de guidage (9) ouvertes vers l'extérieur, en vue de l'implantation sur une embase (6).

3. Poste de refroidissement (1) selon la revendication 1 ou 2, **caractérisé par le fait que** le premier caisson répartiteur (14) comporte, à l'intérieur d'une ouverture (11), un conduit d'évacuation de liquide guidé coaxialement au conduit d'arrivée de liquide.

4. Poste de refroidissement (1) selon l'une des revendications 1 à 3, **caractérisé par le fait que** l'ensemble de plates-formes (10) compte au moins deux éléments constitutifs.

5. Poste de refroidissement (1) selon l'une des revendications 1 à 4, **caractérisé par le fait qu'**au sein de l'ensemble de plates-formes (10), au moins une plate-forme (10) est équipée d'un thermomètre électrique (16) affecté à la mesure de la température du liquide.

6. Poste de refroidissement (1) selon l'une des revendications 1 à 5, **caractérisé par le fait qu'**au sein de l'ensemble de plates-formes (10), au moins une plate-forme (10) est équipée d'un filtre à liquide (18) remplaçable.

7. Poste de refroidissement (1) selon l'une des revendications 1 à 6, **caractérisé par le fait qu'**au sein de l'ensemble de plates-formes (10), au moins une plate-forme (10) est pourvue d'au moins une bride (17).

8. Poste de refroidissement (1) selon l'une des revendications 1 à 7, **caractérisé par le fait que** ledit poste de refroidissement (1) inclut un ensemble de refroidisseurs de liquide (3) constitué par des refroidisseurs de liquide (3) à capacités réfrigérantes différentes, chaque refroidisseur de liquide (3) dudit ensemble présentant des raccords mécaniques et hydrauliques identiques, et une même largeur de réalisation.

9. Poste de refroidissement (1) selon l'une des revendications 1 à 8, **caractérisé par le fait que** ledit poste de refroidissement (1) est doté d'un encadrement (2) qui est relié au refroidisseur de liquide (3), par l'intermédiaire duquel le poste de refroidissement (1) proprement dit peut être dressé verticalement, et dans lequel est formé un volume d'espace apte à recevoir, simultanément, au moins un refroidisseur de liquide (3) et une soufflante (4), sachant que ledit poste de refroidissement (1) comporte une embase (6) sur laquelle sont prévus des raccords dédiés à un refroidisseur de liquide (3), à une soufflante (4) et à un réservoir de liquide (5), et sachant que ladite embase (6) est percée d'un orifice d'insertion (7) destiné à un filtre à liquide (8) et agencé de façon telle que ledit filtre à liquide (8) puisse être introduit dans ledit orifice d'insertion (7), et dans ledit réservoir de liquide, à l'état raccordé à ladite embase (6).

10. Poste de refroidissement (1) selon la revendication 9, **caractérisé par le fait qu'**il est relié aux quatre éléments suivants :
un refroidisseur de liquide (3),
une soufflante (4),
un réservoir de liquide (5) et
un filtre à liquide (8).

11. Système de fourniture d'installations de refroidissement de liquides, incluant au moins un poste de refroidissement (1) conforme à l'une des revendications 1 à 10, ainsi
- qu'un ensemble de refroidisseurs de liquide (3), constitué par des refroidisseurs de liquide (3) à capacités réfrigérantes différentes, chaque refroidisseur de liquide (3) dudit ensemble présentant des raccords mécaniques et hydrauliques identiques, et une même largeur de réalisation,
- qu'un ensemble de soufflantes (4), constitué par des soufflantes (4) de différentes puissances, chaque soufflante (4) dudit ensemble présentant des raccords mécaniques et électriques identiques, ainsi que des cotes extérieures identiques,
- qu'un ensemble de réservoirs de liquide (5), constitué par des réservoirs de liquide (5) de différentes contenances, chaque réservoir de liquide (5) dudit ensemble présentant des raccords identiques et une même largeur de réalisation, et
- qu'un ensemble de filtres à liquide (8), constitué par des filtres à liquide (8) à grandeurs caractéristiques différentes, chaque filtre à liquide (8) dudit ensemble présentant des raccords mécaniques et hydrauliques identiques.

12. Système de fourniture d'installations de refroidissement de liquides selon la revendication 7, **caractérisé par le fait que** l'ensemble de refroidisseurs de liquide (3) et/ou l'ensemble de soufflantes (4) et/ou l'ensemble de réservoirs de liquide (5), et/ou l'ensemble de filtres à liquide (8), compte(nt) au moins deux éléments constitutifs.
